# EUROPEAN PATENT APPLICATION

(11) **EP 1 930 395 A2**
(43) Date of publication of application: **11.06.2008**
(21) Application number: 07121788.9
(22) Date of filing: 28.11.2007
(51) Int. Cl.: C09K 11/77, G21K 4/00

(54) **Scintillation compositions and method of manufacture thereof**

(30) Priority: 04.12.2006 US 566458
(71) Applicant: GE Homeland Protection, Inc., Newark CA 94560-1012 (US)
(72) Inventor: SRIVASTAVA, Alok Mani, Niskayuna, NY 12309 (US); DUCLOS, Steven Jude, Clifton Park, NY 12065 (US); COMANZO, Holly Ann, Niskayuna, NY 12309 (US); LOUREIRO, Sergio Paulo Martins, Saratoga Springs, NY 12866 (US)
(74) Representative: Szary, Anne Catherine

(57) **Abstract**

Disclosed herein are scintillator compositions that comprise pre-scintillator compositions that are mixed with cerium and/or praseodymium halides. The scintillator compositions comprise solid solutions of the pre-scintillator compositions that are mixed with cerium and/or praseodymium halides and are eventually fired. Disclosed herein too are methods of manufacturing the scintillator compositions.

## Description

This disclosure relates to scintillation compositions and methods of manufacture thereof.

Scintillator crystals (hereinafter scintillators) are widely used in detectors for high-energy radiation, e.g. gamma rays, X-rays, cosmic rays, and other particles characterized by an energy level of greater than or equal to about 1 keV. The scintillator is coupled with a light-detection means, such as, for example, a photodetector. When photons from a radionuclide source impact the scintillator, the scintillator emits light. The photodetector produces an electrical signal proportional to the number of light pulses received, and to their intensity. Scintillators are in common use for many applications. Examples include medical imaging equipment, e.g., positron emission tomography (PET) devices; well logging for the oil and gas industry, and various digital imaging applications.

The composition of the scintillators generally determines the performance of the radiation detection equipment. The scintillator must be responsive to X-ray and gamma ray excitation. Moreover, the scintillator should possess a number of characteristics that enhance radiation detection. For example, it is desirable for most scintillator compositions to display a high light output, a short decay time, a reduced afterglow, a high "stopping power", and an acceptable energy resolution.

Various scintillator compositions that possess most or all of these properties have been in use over the years. For example, thallium-activated sodium iodide (NaI(Tl)) has been widely employed as a scintillator for decades. Scintillators of this type are relatively large and fairly inexpensive. Moreover, NaI(Tl) scintillators are characterized by a very high light output.

Examples of other common scintillator compositions include bismuth germanate (BGO), cerium-doped gadolinium orthosilicate (GSO), and cerium-doped lutetium orthosilicate (LSO). Each of these materials has some good properties that are very suitable for certain applications. However, as explained below, these materials also unfortunately possess some drawbacks.

For example, thallium-activated sodium iodide is a very soft, hygroscopic scintillator, readily absorbing oxygen and moisture. Moreover, such a scintillator produces a large and persistent after-glow, which can interfere with the intensity-counting system. Furthermore, the decay time of NaI(Tl), about 230 nanoseconds, is too slow for many applications.

BGO, on the other hand, is non-hygroscopic. However, the light yield of this scintillator (15% of NaI(T1)), is too low for many applications. The scintillator also has a slow decay time. Moreover, it has a high refractive index, which results in light loss due to internal reflection.

While GSO scintillator crystals are suitable for some applications, their light yield is only about 20% of that obtained with NaI(T1). Moreover, these scintillator crystals are easily cleaved. It is therefore very difficult to cut and polish these crystals into any specific shape, without running the risk of fracturing the entire scintillator crystal.

The LSO scintillator also exhibit some drawbacks. For example, the lutetium element of this scintillator contains a small amount of a natural, long-decay radioactive isotope, Lu176. The presence of this isotope will provide a background count rate that can greatly interfere with highly sensitive detector applications. Moreover, lutetium is very expensive, and has a relatively high melting point, which can sometimes make processing difficult.

In view of these drawbacks, it is desirable to have new scintillating materials that can serve as efficient light generators, can exhibit efficient gamma ray attenuation and have reasonable energy resolution.

### SUMMARY

Disclosed herein is a composition comprising the reaction product of a cerium halide and/or a praseodymium halide with a pre-scintillator composition having the formula (I)

A₂LnX₅ (I)

where A comprises ions of thallium, Group IA elements, or a combination comprising at least one of the foregoing ions, Ln comprises ions of rare earth elements of the lanthanide series and bismuth and X comprises a halogen; or a cerium halide and/or a praseodymium halide with a pre-scintillator composition comprising an elpasolite compound having the formula (II)

C₂DLnX₆ (II)

where C comprises ions of thallium, Group IA elements, or a combination comprising at least one of the foregoing ions, D comprises ions of thallium, Group IA elements, , or a combination comprising at least one of the foregoing ions; Ln comprises ions of rare earth elements of the lanthanide series and bismuth and X comprises a halogen; or a cerium halide and/or a praseodymium halide with a pre-scintillator composition having the formula (III)

ELnFX₅ (III)

where E comprises ions of cesium, rubidium, thallium, or a combination comprising at least one of the foregoing ions, F comprises ions of thallium, Group IA elements, or a combination comprising at least one of the foregoing ions, Ln comprises ions of rare earth elements of the lanthanide series and bismuth and X comprises a halogen.

Disclosed herein is a composition comprising a solid solution comprising a scintillator composition of the formula (IV):

A2Ln(_{1-x-y})CeₓPryX₅ (IV)

where A comprises ions of thallium or Group IA elements, Ln comprises ions of rare earth elements of the lanthanide series and bismuth, X comprises a halogen, Ce represents cerium, Pr represents praseodymium and x can have values of 0 to 1, while y can have values of 0 to 1, but where x and y are not both equal to 0 or 1 simultaneously; or a solid solution comprising a scintillator composition of the formula (V):

C₂DLn_{(1-x-y)}CeₓPr_{y}X₆ (V)

where C comprises ions of thallium, Group IA elements, or a combination comprising at least one of the foregoing ions, D comprises ions of thallium, Group IA elements, , or a combination comprising at least one of the foregoing ions, Ln comprises ions of rare earth elements of the lanthanide series and bismuth, X comprises a halogen, Ce represents cerium, Pr represents praseodymium and x can have values of 0 to 1, while y can have values of 0 to 1, but where x and y are not both equal to 0 or 1 simultaneously; or a solid solution comprising a scintillator composition of the formula (VI):

ELn_{(1-x-y)}CeₓPr_{y}FX₅ (VI)

where E comprises ions of cesium, rubidium, thallium, or a combination comprising at least one of the foregoing ions, Ln comprises ions of rare earth elements of the lanthanide series and bismuth, X comprises a halogen, F comprises ions of thallium, Group IA elements, or a combination comprising at least one of the foregoing ions, Ce represents cerium, Pr represents praseodymium and x can have values of 0 to 1, while y can have values of 0 to 1, but where x and y are not both equal to 0 or 1 simultaneously.

Disclosed herein is a method of manufacturing a composition comprising mixing a cerium halide and/or a praseodymium halide with a pre-scintillator composition having the formula (I) to form a first mixture

A₂LnX₅ (I)

where A comprises ions of thallium, Group IA elements, or a combination comprising at least one of the foregoing ions, Ln comprises ions of rare earth elements of the lanthanide series and bismuth and X comprises a halogen; or mixing a cerium halide and/or a praseodymium halide with a pre-scintillator composition comprising an elpasolite compound having the formula (II) to form a second mixture

C₂DLnX₆ (II)

where C comprises ions of thallium, Group IA elements, or a combination comprising at least one of the foregoing ions, D comprises ions of thallium, Group IA elements, , or a combination comprising at least one of the foregoing ions; Ln comprises ions of rare earth elements of the lanthanide series and bismuth and X comprises a halogen; or mixing a cerium halide and/or a praseodymium halide with a pre-scintillator composition having the formula (III) to form a third mixture

ELnFX₅ (III)

where E comprises ions of cesium, rubidium, thallium, or a combination comprising at least one of the foregoing ions, F comprises ions of thallium, Group IA elements, or a combination comprising at least one of the foregoing ions, Ln comprises ions of rare earth elements of the lanthanide series and bismuth and X comprises a halogen; and firing the first mixture, the second mixture or the third mixture to form a solid solution.

### BRIEF DESCRIPTION OF FIGURES

Figure 1 is a graphical representation of the light yields obtained from scintillator compositions comprising K₂LaCl₅ with either cerium chloride or cerium chloride and praseodymium chloride;
Figure 2 is a graphical representation of the light yields obtained from scintillator compositions comprising Cs₂NaLaCl₆ with either cerium chloride or cerium chloride and praseodymium chloride; and
Figure 3 is a graphical representation of the light yields obtained from scintillator compositions comprising three pre-scintillator compositions that are mixed with cerium chloride. The three pre-scintillator compositions are represented by CsKLaX₅, where X is chlorine, bromine or iodine.

### DETAILED DESCRIPTION

Disclosed herein are scintillator compositions that comprise cerium and/or praseodymium as scintillation activators. In one embodiment, the incorporation of a cerium ion into a pre-scintillator composition increases the light yield of the scintillator composition when compared with scintillator compositions that do not comprise the cerium ion. In another embodiment, the incorporation of a praseodymium ion and a cerium ion into the pre-scintillator composition further increases the light yield of the scintillator composition when compared with scintillator compositions that only comprise the cerium ion. Without being limited to theory, the praseodymium ion acts as an efficient hole trap that transfers its recombination energy to the cerium ion thereby increasing the light yield.

In one embodiment, the pre-scintillator composition comprises a compound having the formula (I)

A₂LnX₅ (I)

where A comprises ions of thallium, Group IA elements, or a combination comprising at least one of the foregoing ions, Ln comprises ions of rare earth elements of the lanthanide series and bismuth and X comprises a halogen. Suitable examples of A are ions of potassium, rubidium, cesium, thallium, or the like, or a combination comprising at least one of the foregoing ions.

Suitable examples of Ln are ions of yttrium, scandium, lanthanum, cerium, praseodymium, neodymium, samarium, europium, gadolinium, terbium, dysprosium, holmium, erbium, thulium, ytterbium, lutetium, or the like, or a combination comprising at least one of the foregoing ions. Exemplary rare earth elements that can be used in the pre-scintillator composition of the formula (I) are yttrium, gadolinium, lutetium, lanthanum, or a combination comprising at least one of the foregoing rare earth elements. Examples of halogens are fluorine, chlorine, iodine, bromine, or a combination comprising at least one of the foregoing halogens.

In another embodiment, the pre-scintillator composition comprises an elpasolite compound having the formula (II)

C₂DLnX₆ (II)

where C comprises ions of thallium, Group IA elements, or a combination comprising at least one of the foregoing ions, D comprises ions of thallium, Group IA elements, , or a combination comprising at least one of the foregoing ions, Ln is the same as indicated in the formula (I) and bismuth above and X is a halogen as indicated above in the formula (I). Suitable examples of C are ions comprising potassium, rubidium, cesium, thallium, or the like, or a combination comprising at least one of the foregoing ions. Suitable examples of D are ions of lithium, sodium, or a combination comprising at least one of the foregoing ions.

In yet another embodiment, the pre-scintillator composition comprises a compound having the formula (III)

ELnFX₅ (III)

where E comprises ions of cesium, rubidium, thallium, or a combination comprising at least one of the foregoing ions, Ln is same as indicated in the formula (I) above and bismuth, F comprises ions of thallium, Group IA elements, or a combination comprising at least one of the foregoing ions and X is a halogen as indicated above in the formula (I). Suitable examples of Ln are ions of lanthanum, cerium, gadolinium, praseodymium, yttrium, lutetium, bismuth, or a combination comprising at least one of the foregoing ions. Suitable examples of F are ions of lithium, sodium, potassium, or a combination comprising at least one of the foregoing ions.

As noted above, cesium and/or praseodymium ions can be added to the pre-scintillator compositions of formula (I), (II) or (III) in order to activate these compositions and to manufacture a scintillator composition.

In one embodiment, the cerium and/or the praseodymium halides are added to the pre-scintillator composition of formula (I) to form a first mixture. As will be discussed later, the first mixture is subsequently fired to form a scintillator composition. In a similar manner the cerium and/or the praseodymium halides are added to the pre-scintillator composition of formula (II) to form a second mixture, while a cerium halide and/or a praseodymium halide is added to the pre-scintillator composition of formula (III) to form a third mixture. The second and the third mixtures are also fired to form scintillator compositions.

These scintillator compositions are self-activating. In other words, they don't use a separate activator compound, since cerium and praseodymium function as both the activator (i.e., the emission source of the radiation measured by a scintillation detector) and a host element.

In one embodiment, the cerium ions and the praseodymium ions are introduced into the scintillator compositions via cerium and praseodymium halides respectively.

Examples of cerium halides are cerium chloride, cerium boride, cerium iodide, cerium fluoride, or a combination comprising at least one of the foregoing cerium halides, while examples of praseodymium halides are praseodymium chloride, praseodymium boride, praseodymium iodide, praseodymium fluoride or a combination comprising at least one of the foregoing praseodymium halides.

In one embodiment, the cerium halides are added to the pre-scintillator compositions of formula (IV), (V) or (VI) to form a solid solution. In another embodiment, the praseodymium halides are added to the pre-scintillator compositions of formula (IV), (V) or (VI) to form a solid solution. In yet another embodiment, the cerium halides and the praseodymium halides may be added to the pre-scintillator compositions of formula (IV), (V) or (VI) to form a solid solution. In yet another embodiment, the scintillator compositions may be viewed as being the reaction products of a cerium halide and/or a praseodymium halide with the pre-scintillator compositions of formulas (I), (II) or (III).

When both the cerium halides and the praseodymium halides are added to the pre-scintillator compositions of formula (IV), (V) or (VI), they may be added either simultaneously or sequentially to form a solid solution. In an exemplary embodiment, the cerium halides and the praseodymium halides are added simultaneously to the pre-scintillator compositions of formula (IV), (V) or (VI) to form a solid solution.

In one embodiment, the pre-scintillator composition of formula (I) may be simultaneously reacted with a cerium halide and/or a praseodymium halide to form a scintillator composition of the formula (IV) below:

A₂Ln_{(1-x-y)}CeₓPr_{y}X₅ (IV)

where A₂, Ln and X are the same as indicated above in formula (I), Ce represents cerium, Pr represents praseodymium and x can have values of 0 to 1, while y can have values of 0 to 1. It is to be noted that x and y cannot simultaneously be both 0 or 1 in the scintillator composition (IV). For the pre-scintillator composition, x and y will both be equal to 0 simultaneously. In one embodiment, when only praseodymium is present, x is equal to 0 when y is equal to 1. In another embodiment, when only cerium is present, y is equal to 0 when x is equal to 1. When cerium and praseodymium are both present in the formula (IV), x and y can have values of about 0.01 to 0.99.

In another embodiment, the pre-scintillator composition of formula (II) may be simultaneously reacted with a cerium halide and/or a praseodymium halide to form a scintillator composition of the formula (V) below:

C₂DLn_{(1-x-y)}CeₓPr_{y}X₆ (V)

where C₂, D, Ln and X are the same as indicated above in formula (II), Ce represents cerium, Pr represents praseodymium and x can have values of 0 to 1, while y can have values of 0 to 1. It is to be noted that x and y cannot simultaneously be both 0 or 1 in the scintillator composition (V). For the pre-scintillator composition x and y can both be equal to 0 simultaneously. In one embodiment, when only praseodymium is present, x is equal to 0 when y is equal to 1. In another embodiment, when only cerium is present, y is equal to 0 when x is equal to 1. When cerium and praseodymium are both present in the formula (V), x and y can have values of about 0.01 to 0.99.

In yet another embodiment, the pre-scintillator composition of formula (III) may be simultaneously reacted with a cerium halide to form a scintillator composition of the formula (VI) below:

ELn_{(1-x-y)}CeₓPr_{y}FX₅ (VI)

where E, F, Ln and X are the same as indicated above in formula (II), Ce represents cerium, Pr represents praseodymium and x can have values of 0 to 1, while y can have values of 0 to 1. It is to be noted that x and y cannot simultaneously be both 0 or 1 in the scintillator composition (VI). For the pre-scintillator composition x and y can both be equal to 0 simultaneously. In one embodiment, when only praseodymium is present, x is equal to 0 when y is equal to 1. In another embodiment, when only cerium is present, y is equal to 0 when x is equal to 1. When cerium and praseodymium are both present in the formula (VI), x and y can have values of about 0.01 to 0.99.

As can be seen in the formulas (IV), (V) and (VI), the introduction of cerium halides and/or praseodymium halides into the pre-scintillator compositions promotes a replacement of the lanthanide halide with the cerium halides and/or praseodymium halide.

The scintillator compositions of formulas (IV), (V) or (VI) may be prepared in several different forms. In one embodiment, the composition is in monocrystalline (e.g., "a single crystal") form. Monocrystalline scintillation crystals have a greater tendency for transparency. They are especially useful for high-energy radiation detectors, e.g., those used for gamma rays.

However, the scintillator compositions of formulas (IV), (V) or (VI) can be in other forms as well, depending on its intended end use. For example, they can be in powder form. The compositions can also be prepared in the form of polycrystalline ceramics. It should also be understood that these scintillator compositions may contain small amounts of impurities. These impurities usually originate with the starting materials, and generally constitute less than about 0.1 % by weight of the scintillator compositions. They generally constitute less than about 0.01% by weight of the scintillator compositions.

The scintillator compositions of formulas (IV), (V) or (VI) may also include parasitic phases, whose volume percentage is usually less than about 1%. Moreover, minor amounts of other materials may be purposefully included in the scintillator compositions, as taught in U.S. Patent 6,585,913 (Lyons et al.), which is incorporated herein by reference. For example, minor amounts of other rare earth halides can be added to reduce afterglow. Calcium and/or dysprosium can be added to reduce the likelihood of radiation damage.

The scintillator compositions of formulas (IV), (V) or (VI) may be prepared by several methods. In one embodiment, the scintillator compositions are usually prepared by dry processes. Some exemplary techniques for preparing the polycrystalline materials are described in the aforementioned Lyons patent, as well as in U.S. Patents 5,213,712 (Dole), and 5,882,547 (Lynch et al.), which are incorporated herein by reference. In one embodiment, a suitable powder scintillator composition containing the desired materials (e.g., the pre-scintillator composition along with the cerium halides and/or the praseodymium halides) in the correct proportions is first prepared, followed by such operations as calcination, die forming, sintering, and/or hot isostatic pressing. In another embodiment, the powder scintillator composition can be prepared by mixing various forms of the reactants (e.g., salts, halides, or mixtures thereof). Mixing can be carried out in the presence of a liquid such as, an alcohol or a hydrocarbon.

The mixing of the reactants can be conducted in manufacturing devices that ensure uniform blending to form an intimate mixture. For example, mixing can be conducted in an agate mortar and pestle. Alternatively, a blender such as a ball mill, a bowl mill, a hammer mill, a jet mill, an extruder or a combination comprising at least one of the foregoing blenders can be used. The mixture can also contain various additives, such as fluxing compounds and binders. Depending on compatibility and/or solubility, heptane, or an alcohol such as ethyl alcohol can sometimes be used as a liquid vehicle during milling.

After being blended, the mixture can be fired in a furnace, under temperature and time conditions effective to convert the mixture into a solid solution. In the case of powder reactants, firing will usually be carried out at a temperature of about 500°C to about 900°C. The firing time is generally about 15 minutes to about 10 hours.

In one embodiment, in one method of manufacturing the scintillator composition (IV), the firing is carried out a temperature of about 800°C to about 1,100°C. An exemplary firing temperature for the scintillator composition (IV) is about 1,000°C. An exemplary firing time for the manufacturing of the scintillator composition (IV) is about 30 minutes to about 10 hours.

In another embodiment, in one method of manufacturing the scintillator composition (V), the firing is carried out a temperature of about 800°C to about 1,100°C. An exemplary firing temperature for the scintillator composition (V) is about 1,000°C. An exemplary firing time for the manufacturing of the scintillator composition (IV) is about 30 minutes to about 10 hours.

In yet another embodiment, in one method of manufacturing the scintillator composition (VI), the firing is carried out a temperature of about 800°C to about 1,100°C. An exemplary firing temperature for the scintillator composition (VI) is about 1,000°C. An exemplary firing time for the manufacturing of the scintillator composition (IV) is about 30 minutes to about 10 hours.

Firing should be carried out in an atmosphere free of oxygen and moisture, e.g., in a vacuum, or using an inert gas such as nitrogen, helium, neon, argon, krypton, xenon, or a combination comprising at least one of the foregoing inert gases. Some of the procedures are described in U.S. Patent 7,084,403 (Srivastava et al.), which is incorporated herein by reference. After the firing is complete, the resulting material can be pulverized, to put the scintillator into powder form.

Methods for making single crystal materials are also well known in the art. A nonlimiting, exemplary reference is "Luminescent Materials", by G. Blasse et al., Springer-Verlag (1994). Usually, the appropriate reactants are melted at a temperature sufficient to form a congruent, molten composition. The melting temperature will depend on the identity of the reactants themselves. An exemplary temperature is about 650°C to about 1100°C.

Various techniques can be employed to form single crystals from the molten material. Some of these techniques are described in references such as U.S. Patents 6,437,336 (Pauwels et al.) and 6,302,959 (Srivastava et al.); "Crystal Growth Processes", by J.C. Brice, Blackie & Son Ltd (1986); and the "Encyclopedia Americana", Volume 8, Grolier Incorporated (1981), pages 286-293. These descriptions are incorporated herein by reference. Examples of suitable crystal-growing techniques are the Bridgman-Stockbarger method; the Czochralski method, the zone-melting method (or the "floating zone" method), the temperature gradient method, or a combination comprising at least that one of the foregoing crystal-growing techniques.

In one embodiment, in one method of producing a single crystal, a seed crystal of the desired scintillator composition of formulas (IV), (V) or (VI) (described above) is disposed in a solvent that can dissolve the respective scintillator composition. New crystalline material from the solution of the respective scintillator composition is allowed to grow and added to the seed crystal, using one of the aforementioned growing techniques. The size of the crystal will depend in part on its desired end use, e.g., the type of radiation detector into which it will be incorporated.

The scintillator composition of formulas (IV), (V) or (VI) can be prepared in other forms as well. For example, in the case of the polycrystalline ceramic form mentioned above, the scintillator composition is first produced in powder form or converted to powder form. The material is then sintered to transparency at a temperature that is about 65% to about 85% of the melting point of the powder. The sintering can be carried out under atmospheric conditions, or under pressure.

In another embodiment, the scintillator composition of formulas (IV), (V) or (VI) can be used for detecting high-energy radiation in a scintillation detector. The detector comprises one or more crystals, formed from the scintillator composition. Scintillation detectors are disclosed in U.S. Patents 6,585,913 and 6,437,336, mentioned above, as well as in U.S. Patent 6,624,420 (Chai et al.), which is also incorporated herein by reference. In general, the scintillator composition crystals in these devices receive radiation from a source being investigated, and produce photons that are characteristic of the radiation. The photons are detected with a photodetector. Examples of suitable photodetectors are photomultiplier tubes, photodiodes, charge-coupled device (CCD) sensors, image intensifiers, or a combination comprising at least one of the foregoing photodetectors.

The radiation detectors themselves, which comprise the scintillator and the photodetector, can be connected to a variety of tools and devices, as mentioned previously. Examples are well logging tools and nuclear medicine devices (e.g., PET). The radiation detectors may also be connected to digital imaging equipment, e.g., pixilated flat panel devices. Moreover, the scintillator may serve as a component of a screen scintillator. For example, a powdered scintillator composition can be formed into a relatively flat plate that is attached to a film, e.g., photographic film. High-energy radiation, e.g., x-rays, originating from a source, would contact the scintillator and be converted into light photons, which are then captured and developed on the film.

The scintillator composition of formulas (IV), (V) or (VI) provides numerous advantages over other commercially available scintillator compositions. The scintillator composition can simultaneously exhibit a short decay time, a reduced afterglow, a high "stopping power", and acceptable energy resolution. Furthermore, the scintillator compositions can be manufactured economically, and can also be employed in a variety of other devices that are capable of detecting radiation.

The following examples, which are meant to be exemplary, not limiting, illustrate compositions and methods of manufacturing of some of the various embodiments of the scintillator compositions described herein.

### EXAMPLES

### Example 1

This example was conducted to demonstrate the efficient light generation capabilities of the scintillator composition (IV) comprising cerium and/or praseodymium halides. Six compositions were prepared and tested. One of the compositions comprises only cerium chloride, while five other compositions represent scintillator compositions that comprise cerium and praseodymium chloride.

The six scintillator compositions were prepared by dry-mixing various portions of a pre-scintillator composition (K₂LaCl₅ - where K is potassium, La is lanthanum and Cl is chlorine) with either cerium chloride or cerium chloride and praseodymium chloride. Mixing was carried out in an agate mortar and pestle. The uniform mixture was then transferred to an aluminum crucible, and fired at a temperature of about 900°C. The heating atmosphere was a mixture of 0.5% hydrogen and 99.5% nitrogen. Table 1 shows the six compositions (Sample #'s 1 - 6).

**Table 1**

| Sample # | Composition |
|---|---|
| 1 | K₂La_{0.95}Ce_{0.05}Cl₅ |
| 2 | K₂La_{0.93}Ce_{0.05}Pr_{0.02}Cl₅ |
| 3 | K₂La_{0.90}Ce_{0.05}Pr_{0.05}Cl₅ |
| 4 | K₂La_{0.85}Ce_{0.05}Pr_{0.15}Cl₅ |
| 5 | K₂La_{0.75}Ce_{0.05}Pr_{0.20}Cl₅ |
| 6 | K₂La_{0.45}Ce_{0.05}Pr_{0.50}Cl₅ |

As can be seen in the Table 1, the molar ratio of cerium to praseodymium is varied from Sample #'s 1 - 6. In particular, the amount of lanthanum is reduced while the amount of praseodymium is increased from Sample # 1 to Sample # 6.

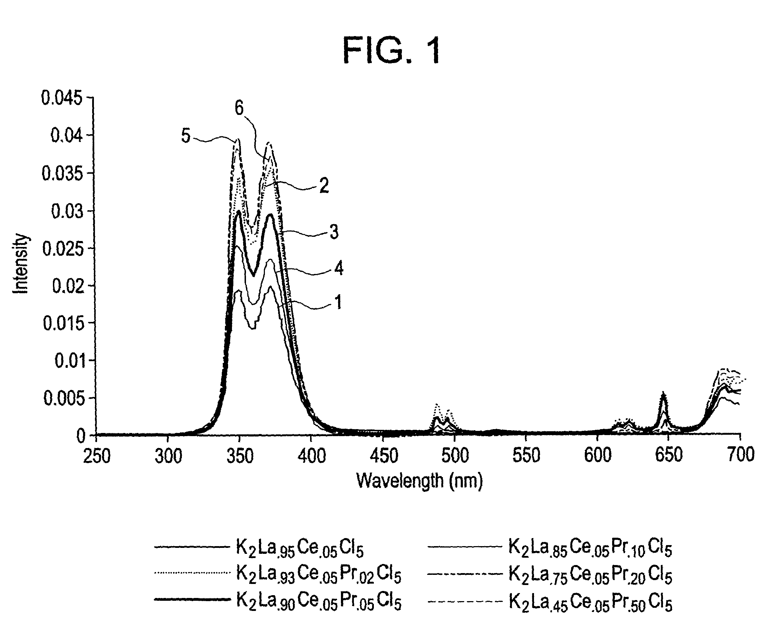

The emission spectrum for each sample was determined under x-ray excitation, using an optical spectrometer. The results are shown in the Figure 1. The Figure 1 is a plot of wavelength (nm) as a function of intensity (arbitrary units). The peak excitation wavelength for the Sample #1 was at about 350 nm and about 380 nm (a doublet). As can be seen from the Figure 1, the addition of praseodymium chloride to the cerium chloride promotes an increase in the peak intensity over that seen in samples that contain only the cerium chloride.

In one embodiment, as can be seen from the Figure 1, the light yield for the scintillator composition (IV) comprising cerium and praseodymium halides is increased by an amount of greater than or equal to about 10%, specifically by an amount of greater than or equal to about 25%, and more specifically by an amount of greater than or equal to about 40% over a composition that contains only cerium halides.

### Example 2

This example was conducted to demonstrate the efficient light generation capabilities of the scintillator composition (V) comprising cerium and/or praseodymium halides. Two compositions were prepared and tested. One of the compositions comprises only cerium chloride, while the other composition represents a scintillator composition that comprises cerium and praseodymium chloride.

The two scintillator compositions were prepared by dry-mixing various portions of a pre-scintillator composition (Cs₂NaLaCl₆ - where Cs is cesium, Na is sodium, La is lanthanum and Cl is chlorine) with either cerium chloride or cerium chloride and praseodymium chloride. Mixing was carried out in an agate mortar and pestle. The uniform mixture was then transferred to an aluminum crucible, and fired at a temperature of about 900°C. The heating atmosphere was a mixture of 0.5% hydrogen and 99.5% nitrogen. Table 2 shows the two compositions (Sample #'s 7 and 8).

**Table 2**

| Sample # | Composition |
|---|---|
| 7 | Cs₂NaCeCl₆ |
| 8 | Cs₂NaCe_{0.95}Pr_{0.05}Cl₆ |

As can be seen in the Table 2, the Sample # 7 comprises the Cs₂NaLaCl₆ with the lanthanum chloride replaced by a cerium halide. In Sample #8, the lanthanum chloride from the Cs₂NaLaCl₆ is replaced by both the cerium halide and praseodymium halide.

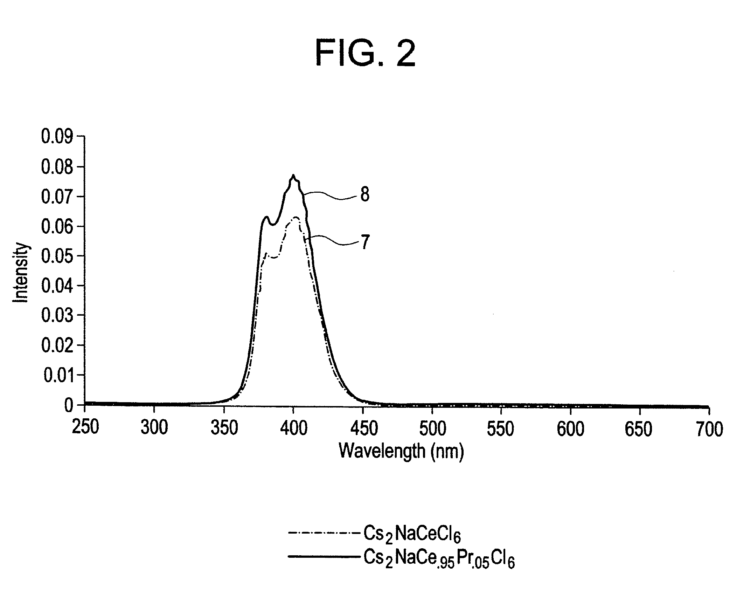

The emission spectrum for each sample was determined under x-ray excitation, using an optical spectrometer. The results are shown in the Figure 2. The Figure 2 is a plot of wavelength (nm) as a function of intensity (arbitrary units). The peak excitation wavelength for the Sample #7 is at about 370 nm and about 415 nm (a doublet). As can be seen from the Figure 2, the addition of praseodymium chloride to the cerium chloride promotes an increase in the peak intensity over that seen in sample that contains only the cerium chloride.

Without being limited by theory, in the elpasolite family of materials, the use of the Pr³⁺ ion promotes the transportation of the charge carriers formed as a result of band gap excitation to the activator Ce³⁺ ion. One potential reason for the lower light yield of many scintillator compositions that are activated by the Ce³⁺ ion is that the ground state of the Ce³⁺ ion is located at too high energy from the top of the valence band leading to inefficient hole trapping by the Ce³⁺ ion. By co-doping the host lattice (in this case, the Cs₂NaLaCl₆) with Pr³⁺ ions, the hole capturing ability is increased, because the hole capturing ability of the Pr³⁺ ion exceeds that of Ce³⁺ ion. Furthermore, the more efficient trapping of the holes by the Pr³⁺ ion can also impede the formation of self-trapped exciton states. The recombination energy on the Pr³⁺ ion, which manifests itself as 4f5d to 4f2 emission transition is then transferred to the Ce³⁺ ion. In this way, efficient sensitization of the Ce³⁺ emission takes place due to band gap excitation. This sensitization process increases the light yield from the Ce³⁺ ion. The Pr³⁺ plays an intermediate role in the transport of excitation energy from the host lattice to the Ce³⁺ ion.

In one embodiment, as can be seen from the Figure 2, the light yield for the scintillator composition (V) comprising cerium and praseodymium halides is increased by an amount of greater than or equal to about 10%, specifically by an amount of greater than or equal to about 25%, and more specifically by an amount of greater than or equal to about 40% over a composition that contains only cerium halides.

### Example 3

This example was conducted to demonstrate the efficient light generation capabilities of the scintillator composition (VI) comprising cerium halides. Three compositions were prepared and tested. Three pre-scintillator compositions were mixed with cerium chloride and tested for their light yields. The three pre-scintillator compositions are represented by CsKLaX₅, where Cs is cesium, K is potassium, La is lanthanum and X is chlorine, bromine or iodine.

Three scintillator compositions were prepared by dry-mixing the three pre-scintillator compositions with only cerium chloride. Mixing was carried out in an agate mortar and pestle. The uniform mixture was then transferred to an aluminum crucible, and fired at a temperature of about 900°C. The heating atmosphere was a mixture of 0.5% hydrogen and 99.5% nitrogen. Table 3 shows the three compositions (Sample #'s 9 - 11).

**Table 3**

| Sample # | Composition |
|---|---|
| 9 | CsKLa₁₋ₓCeₓCl₅ |
| 10 | CsKLa₁₋ₓCeₓBr₅ |
| 11 | CsKLa₁₋ₓCeₓI₅ |

In the Table 3 above, x has a value of 0.05. As can be seen in the Table 3, the Sample # 9 comprises the CsKLaCl₅ with the lanthanum chloride replaced by a cerium halide, while in Sample #10, the lanthanum boride is replaced with cerium boride and in Sample #11, the lanthanum iodide is replaced with cerium iodide.

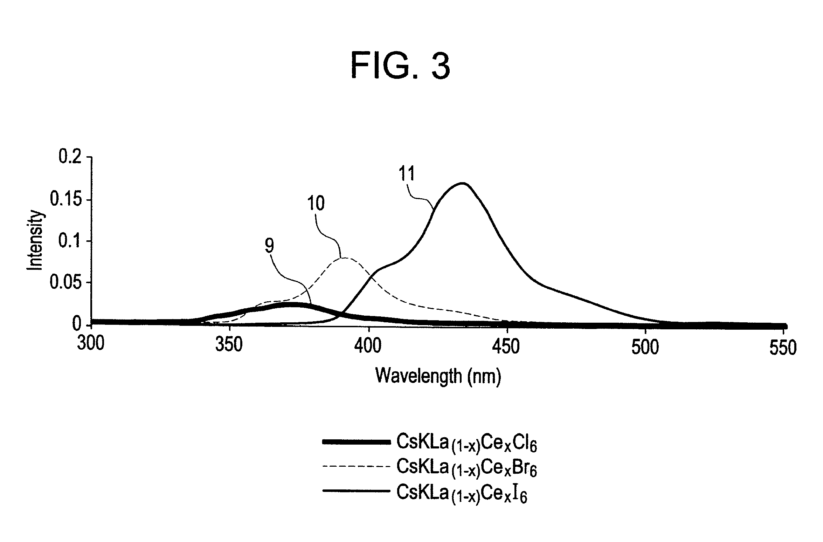

The emission spectrum for each sample was determined under x-ray excitation, using an optical spectrometer. The results are shown in the Figure 3. The Figure 3 is a plot of wavelength (nm) as a function of intensity (arbitrary units). The peak excitation wavelength for the Sample #9 is at about 370 nm. Multiple peaks can be seen for Sample #'s 10 and 11. Both Sample # 10 and 11 show an increased intensity over Sample #9. The Sample # 10 displays a shift in the peak intensity to higher wavelengths than that displayed by the Sample #9, while the Sample # 11 further displays a shift in the peak intensity to higher wavelengths than that displayed by the Sample #10.

These emission characteristics are a clear indication that the scintillator compositions comprising cerium and praseodymium halides can be very useful for detecting x-rays and gamma rays. Moreover, it should be noted that several of these scintillator compositions are self-activating. In other words, they don't require a separate activator compound, since cerium functions as both the activator (i.e., the emission source of the radiation measured by a scintillation detector) and a host element.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A composition comprising:
a solid solution comprising a scintillator composition of the formula (IV):
A₂Ln_{(1-x-y)}CeₓPr_{y}X₅ (IV)
where A comprises ions of thallium or Group IA elements, Ln comprises ions of rare earth elements of the lanthanide series and bismuth, X comprises a halogen, Ce represents cerium, Pr represents praseodymium and x can have values of 0 to 1, while y can have values of 0 to 1, but where x and y are not both equal to 0 or 1 simultaneously; or
a solid solution comprising a scintillator composition of the formula (V):
C₂DLn(_{1-x-y})CeₓPr_{y}X₆ (V)
where C comprises ions of thallium, Group IA elements, or a combination comprising at least one of the foregoing ions, D comprises ions of thallium, Group IA elements, or a combination comprising at least one of the foregoing ions, Ln comprises ions of rare earth elements of the lanthanide series and bismuth, X comprises a halogen, Ce represents cerium, Pr represents praseodymium and x can have values of 0 to 1, while y can have values of 0 to 1, but where x and y are not both equal to 0 or 1 simultaneously; or
a solid solution comprising a scintillator composition of the formula (VI):
ELn_{(1-x-y)}CeₓPr_{y}FX₅ (VI)
where E comprises ions of cesium, rubidium, thallium, or a combination comprising at least one of the foregoing ions, Ln comprises ions of rare earth elements of the lanthanide series and bismuth, X comprises a halogen, F comprises ions of thallium, Group IA elements, or a combination comprising at least one of the foregoing ions, Ce represents cerium, Pr represents praseodymium and x can have values of 0 to 1, while y can have values of 0 to 1, but where x and y are not both equal to 0 or 1 simultaneously.

2. The composition of Claim 1, wherein A comprises A ions of potassium, rubidium, cesium, thallium, or a combination comprising at least one of the foregoing ions and/or wherein in formulas (IV), (V) or (VI), Ln comprises ions of yttrium, scandium, lanthanum, cerium, praseodymium, neodymium, samarium, europium, gadolinium, terbium, dysprosium, holmium, erbium, thulium, ytterbium, lutetium, and bismuth or a combination comprising at least one of the foregoing ions and/or wherein in formulas (IV), (V) or (VI), X is fluorine, chlorine, bromine, iodine or a combination comprising at least one of the foregoing halogens and/or wherein C comprises ions of potassium, rubidium, cesium, thallium, or a combination comprising at least one of the foregoing ions and/or wherein D comprises ions of lithium, sodium, or a combination comprising at least one of the foregoing ions and/or wherein E comprises ions of cesium, rubidium, thallium, or a combination comprising at least one of the foregoing ions and/or wherein F comprises ions of thallium, Group IA elements, or a combination comprising at least one of the foregoing ions.

3. The composition of any one of Claims 1 or 2, wherein the composition is in monocrystalline form or is in powder form or is in the form of a polycrystalline ceramic.

4. The composition of any one of Claims 1 or 2, wherein x is an amount of about 0.01 to about 0.99 or wherein y is an amount of about 0.01 to about 0.99.

5. An article comprising the composition of Claim 1.

6. A composition comprising the reaction product of:
a cerium halide and/or a praseodymium halide with a pre-scintillator composition having the formula (I)
A₂LnX₅ (I)
where A comprises ions of thallium, Group IA elements, or a combination comprising at least one of the foregoing ions, Ln comprises ions of rare earth elements of the lanthanide series and bismuth and X comprises a halogen; or
a cerium halide and/or a praseodymium halide with a pre-scintillator composition comprising an elpasolite compound having the formula (II)
C₂DLnX₆ (II)
where C comprises ions of thallium, Group IA elements, or a combination comprising at least one of the foregoing ions, D comprises ions of thallium, Group IA elements, or a combination comprising at least one of the foregoing ions; Ln comprises ions of rare earth elements of the lanthanide series and bismuth and X comprises a halogen; or
a cerium halide and/or a praseodymium halide with a pre-scintillator composition having the formula (III)
ELnFX₅ (III)
where E comprises ions of cesium, rubidium, thallium, or a combination comprising at least one of the foregoing ions, F comprises ions of thallium, Group IA elements, or a combination comprising at least one of the foregoing ions, Ln comprises ions of rare earth elements of the lanthanide series and bismuth and X comprises a halogen.

7. The composition of Claim 6, wherein A comprises A ions of potassium, rubidium, cesium, thallium, or a combination comprising at least one of the foregoing ions and/or wherein Ln comprises ions of yttrium, scandium, lanthanum, cerium, praseodymium, neodymium, samarium, europium, gadolinium, terbium, dysprosium, holmium, erbium, thulium, ytterbium, lutetium, and bismuth or a combination comprising at least one of the foregoing ions or wherein X is fluorine, chlorine, bromine, iodine or a combination comprising at least one of the foregoing halogens and/or wherein C comprises ions of potassium, rubidium, cesium, thallium, or a combination comprising at least one of the foregoing ions and/or wherein D comprises ions of lithium, sodium, or a combination comprising at least one of the foregoing ions and/or wherein E comprises ions of cesium, rubidium, thallium, or a combination comprising at least one of the foregoing ions and/or wherein F comprises ions of thallium, Group IA elements, or a combination comprising at least one of the foregoing ions.

8. A method of manufacturing a composition comprising:
mixing a cerium halide and/or a praseodymium halide with a pre-scintillator composition having the formula (I) to form a first mixture
A₂LnX₅ (I)
where A comprises ions of thallium, Group IA elements, or a combination comprising at least one of the foregoing ions, Ln comprises ions of rare earth elements of the lanthanide series and bismuth and X comprises a halogen; or
mixing a cerium halide and/or a praseodymium halide with a pre-scintillator composition comprising an elpasolite compound having the formula (II) to form a second mixture
C₂DLnX₆ (II)
where C comprises ions of thallium, Group IA elements, or a combination comprising at least one of the foregoing ions, D comprises ions of thallium, Group IA elements, , or a combination comprising at least one of the foregoing ions; Ln comprises ions of rare earth elements of the lanthanide series and bismuth and X comprises a halogen; or
mixing a cerium halide and/or a praseodymium halide with a pre-scintillator composition having the formula (III) to form a third mixture
ELnFX₅ (III)
where E comprises ions of cesium, rubidium, thallium, or a combination comprising at least one of the foregoing ions, F comprises ions of thallium, Group IA elements, or a combination comprising at least one of the foregoing ions, Ln comprises ions of rare earth elements of the lanthanide series and bismuth and X comprises a halogen.
firing the first mixture, the second mixture or the third mixture to form a solid solution.

9. An article manufactured by the method of Claim 8.
